Europäisches Patentamt

European Patent Office

Office européen des brevets

(19)

(11) Numéro de publication: **0 362 029**

**A1**

(12) # DEMANDE DE BREVET EUROPEEN

(21) Numéro de dépôt: **89402589.9**

(51) Int. Cl.5: **G01B 11/24**

(22) Date de dépôt: **21.09.89**

(30) Priorité: **23.09.88 FR 8812489**

(43) Date de publication de la demande:
**04.04.90 Bulletin 90/14**

(84) Etats contractants désignés:
**AT BE CH DE ES FR GB GR IT LI LU NL SE**

(71) Demandeur: **SOCIETE GENERALE POUR LES TECHNIQUES NOUVELLES S.G.N. Société anonyme dite:**
**1, rue des Hérons Montigny-le-Bretonneux**
**F-78184 Saint-Quentin-en-Yvelines Cédex(FR)**

(72) Inventeur: **Bertrand, Gérard**
**47 bis, Avenue Jean-Jaurès**
**F-92140 Clamart(FR)**
Inventeur: **Imbert, Gérard**
**127, Rue de Fontenay**
**F-92350 Le Plessis-Robinson(FR)**
Inventeur: **Narduzzo, Gabriel**
**20, Rue Marcel Mounier**
**F-59370 Mons en Bareuil(FR)**

(74) Mandataire: **Le Roux, Martine et al**
**Cabinet Beau de Loménie 55, rue d'Amsterdam**
**F-75008 Paris(FR)**

(54) **Procédé de détermination et de contrôle de la forme du bord d'un objet galbé et dispositif pour sa mise en oeuvre.**

(57) La présente invention a pour objet un procédé de détermination de la forme du bord d'un objet galbé (1) et de contrôle de celle-ci par comparaison avec la forme du bord d'un objet galbé standard. On dispose en vis-à-vis du gabarit (2) -matérialisation sur un plan de la projection orthogonale de l'objet standard- l'objet à contrôler (1) et on éclaire les bords desdits gabarits et objets par le pinceau (4) plan d'un laser. A partir des traces (5) (6) ainsi générées et en faisant intervenir des repères (8), on effectue des mesures adéquates.

La présente invention a également pour objet un dispositif pour la mise en oeuvre dudit procédé.

Fig.1

**Procédé de détermination et de contrôle de la forme du bord d'un objet galbé et dispositif pour sa mise en oeuvre**

La présente invention a pour objet un procédé de détermination et de contrôle de la forme du bord d'un objet galbé. Elle concerne plus précisément un procédé de détermination de la forme du bord d'un objet galbé et de contrôle de celle-ci par comparaison avec la forme du bord d'un objet galbé standard.

Elle a également pour objet un dispositif permettant la mise en oeuvre dudit procédé.

On utilise fréquemment, par exemple dans l'industrie automobile, des objets présentant une forme générale galbée. Le bord de ces objets a des formes généralement complexes.

Or, on souhaite le plus souvent que le bord desdits objets s'adapte exactement à un support, par exemple métallique, de forme bien déterminée de façon que l'assemblage de l'objet sur ledit support puisse s'effectuer par simple collage. C'est en particulier le cas de certaines vitres d'automobiles : pare-brises, latéraux, lunettes arrières. Il est donc souhaitable de disposer d'un procédé et d'un dispositif permettant de déterminer la forme d'un objet galbé de façon à pouvoir ultérieurement comparer la forme ainsi déterminée avec une forme standard fournie dans le cahier des charges.

C'est là l'objet de la présente invention.

On notera que le dispositif associé audit procédé doit être de nature à être intégré dans une chaîne de fabrication industrielle desdits objets galbés et doit donc pouvoir réaliser la détermination de ladite forme dans une durée très courte qui est généralement de l'ordre de quelques secondes.

Le procédé de l'invention consiste :

- à matérialiser sur un plan la projection orthogonale de l'objet standard ; cette matérialisation dite gabarit comportant sur son pourtour ou ayant à proximité de celui-ci des repères,

- après positionnement de l'objet à contrôler en vis-à-vis dudit gabarit, à éclairer les bords dudit objet et dudit gabarit par le pinceau plan d'un laser de façon à générer les traces dudit pinceau sur lesdits bords ; ledit pinceau étant situé dans un plan orthogonal au plan dudit gabarit et contenant la normale au bord dudit objet à contrôler ;

- à enregistrer lesdites traces et celle d'au moins un repère, grâce à une caméra, solidaire dudit laser et dont l'axe focal fait avec le plan du pinceau dudit laser un angle constant connu ; l'ensemble solidaire dudit laser et de ladite caméra se déplaçant tout autour dudit objet galbé pour effectuer une série d'enregistrements ;

- à calculer, à partir desdits enregistrements, d'une part, l'espacement entre l'objet à contrôler et le gabarit et, d'autre part, dans le plan dudit gabarit, la distance entre les bords dudit objet et ceux dudit gabarit ;

- et, à comparer lesdites valeurs d'espacement et de distance obtenues après corrections du dégauchissage, aux données relatives à l'objet galbé standard.

Selon l'invention, on réalise donc la détermination en plusieurs points, de la position du bord de l'objet galbé par rapport au bord d'un gabarit. A cette fin, on réalise tout d'abord ledit gabarit puis on fait défiler en vis-à-vis de celui-ci les objets à contrôler.

Le terme "gabarit , utilisé dans le présent texte, représente le produit obtenu par projection orthogonale sur un plan du bord de l'objet galbé standard ; ledit objet galbé standard étant alors dans une position précise (en élévation et en plan) par rapport au plan de projection, ladite position étant appelée position de référence.

La forme dudit objet galbé standard répond aux normes du cahier des charges.

Ce gabarit peut être matérialisé par le découpage d'un volume, par exemple d'une tôle métallique, selon la trace de ladite projection orthogonale.

Selon cette variante de l'invention, les repères associés audit gabarit se situent avantageusement dans son épaisseur.

Selon une autre variante, ledit gabarit peut être réalisé en matérialisant, par un trait par exemple, sur un support sans épaisseur, la trace de ladite projection orthogonale du bord de l'objet galbé standard. Ledit gabarit consiste alors en la surface sur laquelle apparaît ladite trace. Un film photographique peut constituer le support adéquat. D'autres types de supports peuvent être utilisés, notamment des supports compatibles avec des techniques de sérigraphie. Sur lesdits supports, on trouve à proximité de ladite trace des repères.

Ces repères que la caméra localise et dont elle enregistre la trace avec les traces du pinceau laser sur les bords du gabarit et de l'objet à contrôler sont destinés à indiquer où est effectuée la mesure par rapport à une origine arbitraire mais connue, liée au gabarit et à l'objet. Ils peuvent être quelconque. A titre illustratif, on indiquera que :

- dans le cas où le gabarit a une certaine épaisseur, ils peuvent avantageusement consister en des lumières ou raies disposées dans l'épaisseur dudit gabarit ;

- dans le cas où le gabarit est obtenu à partir d'un support sans épaisseur, par exemple un film photographique, ils peuvent consister en des traits ou pastilles éclairé(e)s, ménagé(e)s sur ledit support et convenablement positionné(s)s par rapport au trait matérialisant, sur ledit support la trace de la projection orthogonale du bord de l'objet galbé standard.

La projection orthogonale de l'objet standard -gabarit-étant matérialisée, on réalise le positionnement de l'objet galbé à contrôler, par rapport audit gabarit.

Le positionnement est l'opération selon laquelle l'objet galbé est disposé et maintenu par des moyens connus, par exemple des ventouses et/ou des pions en vis-à-vis du gabarit dans la position de référence ou dans une position voisine de celle-ci.

Ledit objet galbé à contrôler est avantageusement mis dans la position où l'objet galbé standard avait été mis pour la réalisation du gabarit (dite position de référence). Dans la pratique, on ne peut garantir cette position et le décalage résultant dudit positionnement est pris en compte dans les calculs ultérieurs (opération de dégauchissage).

On insistera présentement sur le fait qu'au cours de la mise en oeuvre du procédé de l'invention, le gabarit et l'objet à contrôler ne sont pas en contact.

Ledit objet à contrôler est à positionner en vis-à-vis dudit gabarit. Généralement, il se situe au-dessus de celui-ci.

L'ensemble gabarit-objet galbé à contrôler, où plus exactement ses bords, sont éclairés par le pinceau plan du laser. Ledit pinceau, étant donné son orientation -orthogonal au plan du gabarit et incluant la normale au bord de l'objet à contrôler-génère deux traces, une sur les bords dudit gabarit, l'autre sur les bords dudit objet à contrôler. On éclaire avantageusement par un faisceau lumineux au moins un desdits repères associé(s) au gabarit.

La caméra intervenant enregistre (capte et transmet à des moyens informatiques) lesdites traces et celle du repère. On a ainsi réalisé une mesure.

L'ensemble solidaire formé par le laser et la caméra tourne alors autour de l'ensemble gabarit-objet à contrôler pour réaliser une série de mesures.

Dans un dispositif faisant avantageusement intervenir des moyens informatiques, des calculs seront effectués à partir desdites mesures. On déterminera notamment l'espacement entre l'objet à contrôler et le gabarit dans le plan du pinceau laser et la distance, dans le plan dudit gabarit, entre les bords dudit objet et dudit gabarit.

Lesdites valeurs, après corrections du dégauchissage, sont comparées aux données relatives à l'objet galbé standard.

Le gabarit intervenant dans le procédé de l'invention peut se situer dans un plan horizontal ou dans un plan incliné. Selon une variante préférée, il sera positionné selon un angle d'environ 70° par rapport à l'horizontale. On cherche en fait à se rapprocher des conditions d'utilisation de l'objet galbé (position des vitres d'automobiles par exemple).

On a vu qu'avantageusement, l'objet à contrôler se situait au-dessus dudit gabarit.

Lorsque ledit gabarit présente une certaine épaisseur et avantageusement des repères dans celle-ci, l'axe du pinceau laser est avantageusement perpendiculaire à ladite épaisseur dudit gabarit.

Lorsque ledit gabarit consiste en une surface, comportant la trace de la projection orthogonale de l'objet standard et les repères, l'axe dudit pinceau laser est avantageusement incliné par rapport à ladite surface. Cette inclinaison est à optimiser pour l'obtention de traces exploitables.

Cette variante de l'invention peut être mise en oeuvre avec, comme gabarit, un film photographique ou tout autre support sans épaisseur comportant un trait -un périmètre- (trace de la projection orthogonale de l'objet standard) d'une couleur voisine de la longueur d'onde d'émission du laser utilisé. A proximité dudit trait, on trouve sur le film ou le support des taches repérables.

Avantageusement, on utilise un support de couleur noire pour garantir une absorption maximale des rayons lumineux et minimiser les reflets. C'est pour cette raison que l'utilisation d'un film photographique constitue une variante préférée de l'invention.

L'utilisation d'un film photographique -noir-, comportant un périmètre -rouge- à proximité duquel on a disposé des repères -par exemple blancs, pour être suffisamment lumineux- avec un éclairage par un laser (à hélium-néon) est particulièrement préférée.

Au film photographique, on peut toutefois substituer tout support convenable où la trace de la projection orthogonale de l'objet standard aura été imprimée par exemple par sérigraphie.

Il est possible d'associer au procédé de l'invention faisant intervenir un laser, d'autres techniques, telles que, par exemple, des techniques ultra-sons, pour effectuer des mesures en des points de l'objet à contrôler, qui ne se situent pas sur ses bords.

Selon son autre objet, l'invention concerne un dispositif pour la mise en oeuvre du procédé décrit ci-dessus. A l'évidence, ce dispositif comprend notamment des moyens pour solidariser le gabarit et l'objet à contrôler, un support pour l'ensemble gabarit-objet à contrôler, un ensemble solidaire laser-caméra pouvant tourner autour dudit ensemble gabarit-objet à contrôler, des moyens d'enregistrement des traces générées.

Dans un autre dispositif, le résultat des mesures effectuées sera comparé avec la forme du bord de l'objet galbé standard et cette comparaison permettra de considérer comme acceptable ou non, pour ses utilisations ultérieures, l'objet galbé soumis auxdites mesures.

Le dispositif selon l'invention est tout à fait utilisable en milieu industriel pour contrôler les objets galbés sortant d'une chaîne de fabrication. C'est pourquoi ledit dispositif est avantageusement complété par un appareillage permettant de l'intégrer dans une chaîne. Cet appareillage se compose d'un barillet comportant quatre postes de travail ; le premier poste de travail est destiné à la réception, sur un support avec évidement central pour le passage d'une ventouse, de l'objet galbé amené par une chaîne ; le second poste de travail est destiné à réaliser le positionnement de l'objet galbé par rapport au gabarit ; le troisième poste de travail est celui où est mis en oeuvre le procédé de l'invention et le quatrième poste de travail est celui où l'objet galbé est déchargé de l'appareillage sur une nouvelle chaîne de transport.

On notera en particulier que les divers postes de travail peuvent être prévus de façon que, sur ces postes, l'objet galbé soit dans une position identique ou quasi identique (par exemple soit disposé horizontalement, verticalement ou selon une certaine inclinaison) à celle qu'il occupera dans son utilisation ultérieure.

Grâce à cette intégration, le dispositif selon l'invention permettra non seulement de reconnaître la conformité des objets galbés avec un objet galbé standard, mais permettra, en cas de dérives systématiques de la forme des objets galbés, d'agir très rapidement sur les conditions de formation de ces objets galbés de façon à diminuer les rebuts.

L'invention va maintenant être décrite en référence aux figures annexées sur lesquelles :

- Fig. 1 illustre une première variante du procédé de l'invention selon laquelle le gabarit utilisé est constitué par une plaque d'un matériau épais telle qu'une plaque métallique ;

- Fig. 2 illustre une autre variante du procédé de l'invention selon laquelle le gabarit utilisé est constitué par une surface, telle qu'un film photographique ;

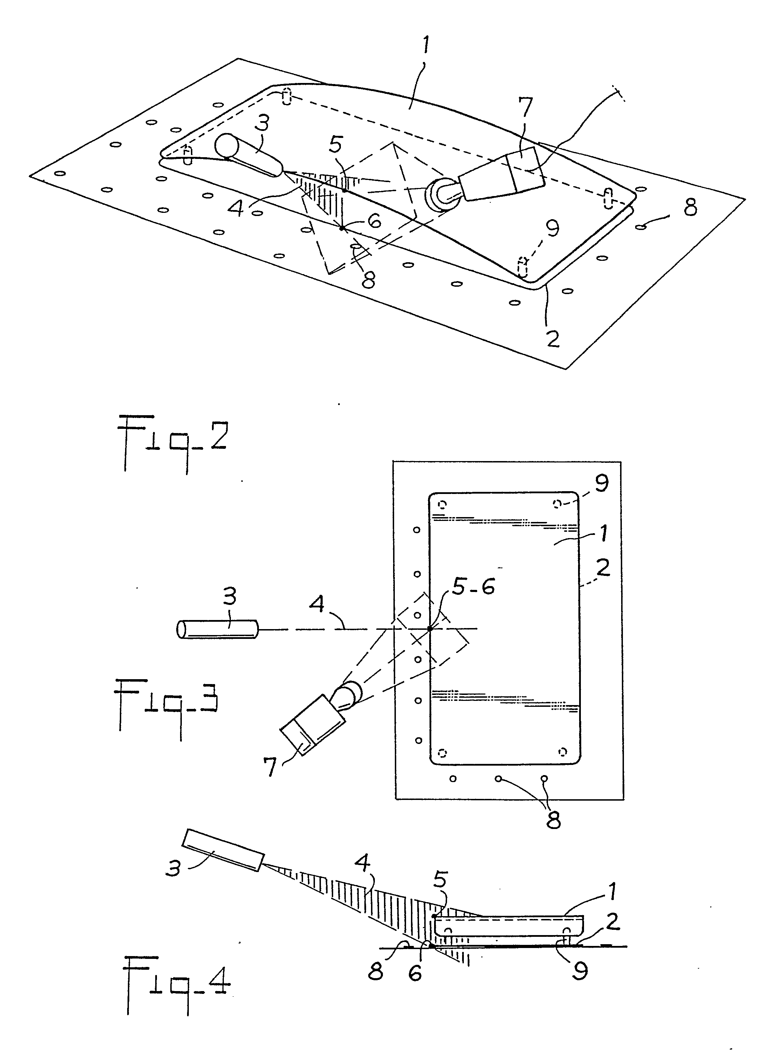

- Fig. 3 et 4 représentent respectivement une vue de dessus et une vue de profil de la figure 2.

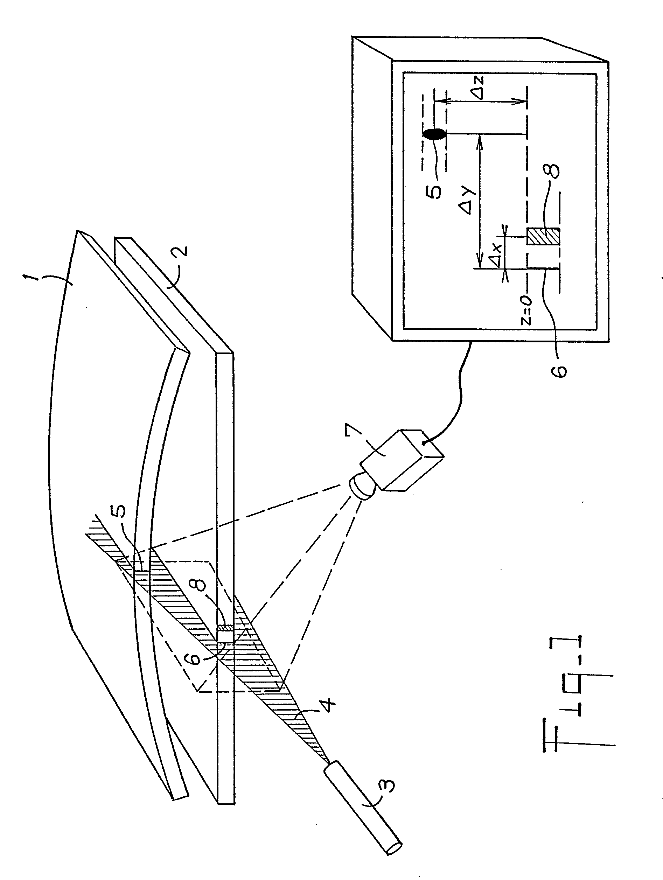

Sur lesdites figures, on a représenté :
- en (1) l'objet galbé à contrôler (vitre latérale d'automobile),
- en (2) le gabarit de l'objet standard correspondant ; ce gabarit est constitué sur la figure 1 par une plaque métallique convenablement découpée, sur la figure 2 par un périmètre (trait rouge) sur un film photographique (de couleur noire),
- en (3) le laser ; ce laser émet un pinceau plan (4) que l'on a représenté en grisé ; ce pinceau est dans un plan perpendiculaire à celui des gabarits -plaque métallique ou film photographique- qui contient la normale au bord de l'objet (1) à contrôler. Selon la figure 1, l'axe dudit pinceau est aussi perpendiculaire à l'épaisseur de la plaque métallique. Selon la figure 2, l'axe dudit pinceau est incliné d'environ 20° par rapport au plan du film photographique.

Ce pinceau laser détermine sur le bord de l'objet à contrôler une trace lumineuse (5) et sur le bord du gabarit une trace lumineuse (6),
- en (7) une caméra dont l'axe focal fait, avec le plan du pinceau (4) un angle déterminé, constant et connu ; cette caméra permet d'enregistrer et de visualiser sur un écran la trace (5), la trace (6) et la trace d'au moins un repère (8) qui se trouve dans le champ de vision de ladite caméra (7).

Sur la figure 1, lesdits repères (8) se trouvent répartis sur le pourtour du gabarit (1), dans son épaisseur.

Sur la figure 2, lesdits repères (8) sont répartis autour du périmètre (2) ; ils consistent par exemple en des taches blanches sur le film noir, qui peuvent être éclairées par en-dessus.

Connaissant l'angle fait par l'axe focal de la caméra (7) avec le plan (4) du pinceau du laser (3), on peut aisément calculer, la distance verticale y dans le plan du gabarit entre la trace (5) du pinceau laser sur les bords de l'objet à contrôler (1) et la trace (6) du pinceau laser sur le gabarit (2).

Connaissant l'angle d'inclinaison du laser par rapport au plan du gabarit, on détermine la distance z dans le plan du pinceau laser entre les bords de l'objet galbé à contrôler et du gabarit.

Dans ce qui précède, on a décrit l'utilisation du dispositif selon l'invention pour réaliser une mesure de la position relative des traces (5) et (6), cette mesure étant celle attachée plus précisément au repère (8). Comme indiqué précédemment, on dispose, tout autour du gabarit (2), d'un certain nombre de repères tels que (8) et l'ensemble solidaire formé par le laser (3) et la caméra (7) tourne autour de l'objet (1) et du gabarit (2) pour effectuer une série de mesures.

On indiquera, à titre illustratif, que l'ensemble des mesures effectuées sur un objet galbé (1) d'une largeur d'environ 400 mm et d'une longueur d'environ 700 mm demande environ 6 s (soit 8 s avec les temps de manutention) ce, avec une précision de 0,1 mm.

Ces mesures ont été effectuées selon la variante du procédé illustré Fig. 2, le laser étant incliné de 20° par rapport au film photographique.

On a schématisé sur la figure 2 quatre pions (9) d'espacement de l'objet à contrôler (1) au-dessus du gabarit (2).

Lesdits pions doivent avoir une hauteur suffisante pour qu'en position de mesure, aucun des bords de l'objet à contrôler ne touche le gabarit, ceci afin que les traces du pinceau laser sur le gabarit et l'objet à contrôler soient suffisamment distinctes.

On donne ci-après, à titre illustratif, quelques précisions sur les quatre postes de travail d'un barillet du type mentionné ci-dessus. Chacun desdits postes comporte un support, pouvant à volonté être incliné.

Ledit support présente un évidement central pour le passage d'une ventouse destinée à solidariser le gabarit et l'objet à contrôler. Il est également muni de pions de positionnement pour ledit gabarit.

Ledit gabarit peut être fixé sur ledit support par encliquetage. Il présente lui aussi un évidement central pour le passage de la ventouse.

L'objet à contrôler est maintenu à distance du gabarit par au moins trois pions d'espacement. Il est maintenu en position inclinée sur deux autres pions de supportage ainsi que éventuellement par la ventouse en son centre.

## Revendications

1. Procédé de détermination de la forme du bord d'un objet galbé (1) et de contrôle de celle-ci par comparaison avec la forme du bord d'un objet galbé standard, caractérisé en ce qu'il consiste :
- à matérialiser sur un plan la projection orthogonale dudit objet standard, cette matérialisation dite gabarit (2) comportant sur son pourtour ou ayant à proximité de celui-ci des repères (8) ;
- et, après positionnement de l'objet à contrôler (1) en vis-à-vis dudit gabarit (2), à éclairer les bords dudit objet et dudit gabarit par le pinceau plan (4) d'un laser (3) de façon à générer les traces (5) (6) dudit pinceau (4) sur lesdits bords ; ledit pinceau (4) étant situé dans un plan orthogonal au plan dudit gabarit (2) et contenant la normale au bord dudit objet à contrôler ;
- à enregistrer lesdites traces (5) (6) et celle d'au moins un repère (8), grâce à une caméra (7), solidaire dudit laser (3) et dont l'axe focal fait avec le plan du pinceau (4) dudit laser un angle constant connu ; l'ensemble solidaire dudit laser (3) et de ladite caméra (7) se déplaçant tout autour dudit objet galbé (1) pour effectuer une série d'enregistrements ;
- à calculer, à partir desdits enregistrements, d'une part, dans le plan du pinceau laser, l'espacement entre l'objet à contrôler (1) et le gabarit (2) et, d'autre part, dans le plan dudit gabarit (2), la distance entre les bords dudit objet (1) et ceux dudit gabarit (2) ;
- et, à comparer lesdites valeurs d'espacement et de distance obtenues après corrections du dégauchissage, aux données relatives à l'objet galbé standard.

2. Procédé selon la revendication 1, caractérisé en ce que ledit gabarit (2) est incliné par rapport à l'horizontale et en ce que l'objet à contrôler (1) est positionné au-dessus de celui-ci.

3. Procédé selon l'une des revendications 1 ou 2, caractérisé en ce que ledit gabarit (2) consiste en un volume comportant dans son épaisseur lesdits repères (8) et en ce que l'axe dudit pinceau laser (4) est perpendiculaire à ladite épaisseur dudit gabarit (2).

4. Procédé selon l'une des revendications 1 ou 2, caractérisé en ce que ledit gabarit (2) consiste en une surface, ladite surface comportant la trace de ladite projection orthogonale et lesdits repères (8) et en ce que l'axe dudit pinceau laser (4) est incliné par rapport à ladite surface.

5. Procédé selon la revendication 4, caractérisé en ce que ledit gabarit (2) consiste en une surface noire telle un film photographique comportant ladite trace sous forme d'un trait d'une couleur voisine de la longueur d'onde d'émission du laser, ledit film comportant à proximité dudit trait des taches repérables.

6. Dispositif pour la mise en oeuvre du procédé selon l'une quelconque des revendications précédentes, caractérisé en ce qu'il comprend notamment :
- des moyens pour la solidarisation dudit gabarit (2) et dudit objet à contrôler (1),
- un support pour l'ensemble gabarit (2) - objet à contrôler (1),
- un ensemble solidaire laser (3) - caméra (7), pouvant tourner autour dudit ensemble gabarit (2) - objet à contrôler (1) ;
- des moyens d'enregistrement des traces générées.

7. Dispositif selon la revendication 6, caractérisé en ce qu'il est intégré dans la chaîne de fabrication-contrôle d'objets galbés au moyen d'un appareillage comportant un poste de réception de l'objet, un poste de positionnement dudit objet en vis-à-vis d'un gabarit, un poste de mesure proprement dit et un poste de décharge dudit objet.

EP 0 362 029 A1

Fig.1

Fig.2

Fig.3

Fig.4

**Office européen des brevets**

**RAPPORT DE RECHERCHE EUROPEENNE**

Numero de la demande

EP 89 40 2589

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | OPTICAL ENGINEERING, vol. 18, no. 1, janvier/février 1979, pages 63-66; G. INDEBETOUW: "A simple optical noncontact profilometer"<br>* Figure 2 *<br>--- | 1,6 | G 01 B 11/24 |
| Y | EP-A-0 168 557 (DORNIER GmbH)<br>* Figures 1,2; page 5, ligne 23 - page 6, ligne 14 *<br>--- | 1,6 | |
| A | DE-A-3 012 559 (FUJI ELECTRIC CO. LTD)<br>* Figure 3; page 9, ligne 16 - page 10, ligne 15 *<br>----- | 1,7 | |

DOMAINES TECHNIQUES
RECHERCHES (Int. Cl.5)

G 01 B

Le présent rapport a été établi pour toutes les revendications

| Lieu de la recherche | Date d'achèvement de la recherche | Examinateur |
|---|---|---|
| LA HAYE | 04-01-1990 | BATTESON A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)